# EUROPÄISCHE PATENTSCHRIFT

(11) **EP 2 442 281 B1**
(45) Veröffentlichungstag und Bekanntmachung des Hinweises auf die Patenterteilung: **13.11.2013**
(21) Anmeldenummer: 11007630.4
(22) Anmeldetag: 20.09.2011
(51) Int. Cl.: B60W 40/09, B60W 50/14, G07C 5/08, G09B 19/16

(54) **Verfahren und Vorrichtung zur Bewertung der Fahrweise eines Fahrzeugführers von Kraftfahrzeugen, insbesondere Nutzfahrzeugen**
Method and device for evaluating the driving of a driver of motor vehicles, in particular commercial vehicles
Procédé et dispositif d'évaluation de la conduite d'un conducteur de véhicules automobiles, notamment des véhicules utilitaires

(30) Priorität: 13.10.2010 DE 102010048325
(43) Veröffentlichungstag der Anmeldung: 18.04.2012
(73) Patentinhaber: MAN Truck & Bus AG, 80995 München (DE)
(72) Erfinder: Dörner, Karlheinz, 85757 Karlsfeld (DE); Zimmermann, Andreas, 80995 München (DE); Heyes, Daniel, 80687 München (DE); Huber, Martin, 81243 München (DE); Drimml, Peter, 85221 Dachau (DE); Michel, Britta, 81675 München (DE)

(56) Entgegenhaltungen:
- DE-A1- 4 338 073
- DE-A1-102004 038 215
- DE-A1-102004 042 865
- US-A1- 2005 143 884
- US-A1- 2005 206 508

## Beschreibung

Die Erfindung betrifft ein Verfahren zur Bewertung der Fahrweise eines Fahrzeugführers von Kraftfahrzeugen, insbesondere von Nutzfahrzeugen, nach dem Oberbegriff des Anspruchs 1. Ferner betrifft die Erfindung eine Vorrichtung zur Bewertung der Fahrweise eines Fahrzeugführers von Kraftfahrzeugen, insbesondere von Nutzfahrzeugen, nach dem Oberbegriff des Anspruchs 17.

Bewertungsverfahren zur Bewertung der Fahrweise von Fahrzeugführern sind allgemein bekannt, so zum Beispiel aus der DE 10 2008 040 284 A1, bei der eine individuelle Fahrweise eines Fahrers bei bestimmten Fahrsituationen erfasst und ausgewertet wird, um diese dann zur Optimierung des Fahrzeugbetriebs zu nutzen, zum Beispiel dahingehend, dass der Fahrer geschult wird und auf ein bestimmtes Fehlverhalten hingewiesen wird.

Weiter ist aus der DE 10 2008 041 618 A1 ein Verfahren zum Bewerten der Fahrweise eines Fahrers mit Bezug auf die Kraftstoffnutzung bekannt, bei dem ein aktuelles Fahrzeuggeschwindigkeitssignal ermittelt wird, anschließend eine Tiefpassfilterung des ersten Signals durchgeführt wird und die Fahrweise in Bezug auf die Kraftstoffnutzung durch Auswerten der Differenz zwischen den beiden Signalen bewertet wird.

Aus der DE 10 2008 055 656 A1 ist ein Messgerät zur Messung und Bewertung des Fahrstils von Kraftfahrzeugfahrern bekannt, bei dem insbesondere das Bremsverhalten ausgewertet wird. Dabei können im Rahmen der Bewertung bestimmte Werturteile abgegeben bzw. ausgegeben werden, wie zum Beispiel Farbcodes, Wertbegriffe, Zahlen auf einer Werteskala, Bildmuster sowie akustische Signale.

Aus der DE 10 2005 025 271 A1 ist weiter ein Verfahren zur Klassifizierung der Fahrweise von mehreren Fahrzeugen in einem Fahrzeugkollektiv bekannt.

US 200510143884 beschreibt ein Informationssystem, das dem Fahrer eines Fahrzeugs Hinweise bzw. Warnungen vermittelt, wobei die Erzeugung der Informationen durch Informationsquellen zum einen durch den Fahrerzustand und zum anderen durch das Fahrerverhalten beeinflusst wird, um die Ausgabehäufigkeit der Informationen auf den Zustand und / oder des Verhalten des Fahrers abzustimmen. Konkret wird dabei in Abhängigkeit vorn Fahrerzustand und/oder vorn Fahrerverhalten in einer Informationsquelle die Häufigkeit, mit der Informationen erzeugt werden, verändert.

Bei all diesen Verfahren besteht jedoch das Problem, dass dem Fahrer lediglich eine Fehlermeldung bzw. eine Bewertung seines Fahrstils insgesamt vermittelt wird, ein Lernfortschritt jedoch nicht anerkannt bzw. kommuniziert wird.

Des Weiteren werden derartige Fahrhinweise bzw. Fahrstilbewertungen stets global vorgenommen, und zwar unabhängig davon, ob es sich um Fahranfänger oder geschulte, erfahrene Fahrer handelt. Dadurch kann es zum Beispiel vorkommen, dass selbst bei sehr erfahrenen, geschulten Fahrern ein Fahrerhinweis bzw. eine Fahrinformation angezeigt wird, obwohl es sich nur um ein einmaliges Fehlverhalten handelt. Dies kann vom Fahrer dann als Bevormundung aufgefasst werden, so dass Fahrhinweisen bzw. Fahrinformationen nur noch eine geringe Beachtung geschenkt wird.

Es ist daher Aufgabe der vorliegenden Erfindung, ein Verfahren und eine Vorrichtung zur Bewertung der Fahrweise eines Fahrzeugführers von Kraftfahrzeugen, insbesondere von Nutzfahrzeugen, zur Verfügung zu stellen, mittels dem eine dem individuellen Lernfortschritt des Fahrers und/oder dem Fahrverhalten des Fahrers bzw. auch dem Erfahrungs- und Schulungsgrad des Fahrers gerecht werdende Anzeige von Fahrinformationen erfolgt.

Diese Aufgabe wird gelöst mit den Merkmalen der unabhängigen Patentansprüche. Vorteilhafte Ausgestaltungen sind Gegenstand der darauf rückbezogenen Unteransprüche.

Gemäß Anspruch 1 ist ein Verfahren zur Bewertung der Fahrweise eines Fahrzeugführers von Kraftfahrzeugen, insbesondere von Nutzfahrzeugen, vorgesehen, bei dem dem Fahrer, d.h. dem Fahrzeugführer, in Abhängigkeit von definierten, während des Fahrzeugbetriebs erfassten Fahrsituationen wenigstens eine die Fahrweise bewertende, insbesondere einen Fahrfehler bewertende, und/oder die Fahrweise vorgebende Fahrinformation angezeigt wird, zum Beispiel optisch und/oder akustisch angezeigt wird. Erfindungsgemäß ist vorgesehen, dass die wenigstens eine Fahrinformation-Anzeige in Abhängigkeit von einem mittels einer Fahrstil-Bewertungseinrichtung erfassten Lernfortschritt und/oder Fahrverhalten eines Fahrers, d.h. Fahrzeugführers, in einer definiert vorgegebenen Weise adaptiert wird.

Mit der erfindungsgemäßen Lehre kann somit der individuelle Lernfortschritt des Fahrers bewertet werden und in die konkrete Anzeige der jeweiligen Fahrinformation einfließen. Dabei kann vor allem die Motivation eines Fahrers, den Fahrhinweisen bzw. der Fahrinformation Beachtung zu schenken, um den Fahrstil in einer gewünschten Weise anzupassen, wesentlich erhöht werden. Dies wirkt sich positiv auf eine verbrauchs- und verschleißreduzierende Fahrweise aus.

Andererseits können zum Beispiel mit besonders erfahrenen und geschulten Fahrern durch die erfindungsgemäße Adaption zumindest bestimmte Fahrinformationen, zum Beispiel unkritische Fahrfehler, nicht zur Anzeige gebracht werden, falls es sich um einen mehr oder weniger einmaligen Fahrfehler des Fahrers handelt.

Durch die Adaption bzw. Veränderung der Fahrinformations-Anzeige wird weiterhin grundsätzlich die Aufmerksamkeit des Fahrers wesentlich mehr auf diese Signale gelenkt als dies bei solchen Symbolen bzw. Signalen der Fall ist, die stets gleich angezeigt werden, so dass die Akzeptanz der jeweils gegebenen Fahrinformation bzw. Fahrhinweise durch den Fahrer wesentlich erhöht ist.

Gemäß einer konkreten Ausgestaltung können im Rahmen der Adaption die Art und/oder die Dauer und/oder die Häufigkeit der Anzeige der wenigstens einen Fahrinformation adaptiert und/oder verändert werden. Beispielsweise kann bei einer optischen Fahrinformation-Anzeige die Größe und/oder die Farbe und/oder die Farbintensität und/oder die Symbolik und/oder ein Informationstext, um nur einige Beispiele zu nennen, in einem vorgegebenen Maße verändert werden. Bei einer akustischen Fahrinformation-Anzeige kann dagegen zum Beispiel die Lautstärke und/oder die Tonart und/oder eine Aussage verändert werden.

Mit derartigen erfindungsgemäßen Ausgestaltungen lassen sich somit Fahrinformationen in unterschiedlichster und deutlich unterscheidbarer Weise anzeigen, wobei der Fahrer bei einer Veränderung bzw. Adaption der Fahrinformations-Anzeige sofort merkt, ob sich seine Fahrweise, bezogen auf einen bestimmten Fahrfehler, verbessert oder verschlechtert hat.

Beispielsweise kann in Verbindung mit einer Fahrinformations-Anzeige die Farbe bei einem schlechten Fahrstil von zum Beispiel dunkelrot in mehreren definierten Stufen nach zum Beispiel leuchtend grün adaptiert werden, wenn sich das Fahrverhalten des jeweiligen Fahrers über einen vorgegebenen Zeitraum entsprechend verbessert hat.

Es versteht sich, dass die die Fahrweise und/oder den Lernfortschritt eines Fahrers wiederspiegelten Daten einer Fahrt zum Beispiel auf einem Speichermedium abgespeichert werden können, zum Beispiel auf einer Fahrerkarte eines Tachographen, insbesondere eines digitalen Tachographen, so dass der Lernfortschritt und/oder das Fahrverhalten nicht für jede einzelne Fahrt, sondern fahrtenübergreifend und/oder fahrzeugübergreifend über einen längeren und/oder definierten Zeitraum bewertet werden kann oder können.

Weiter können zum Beispiel bei einer akustischen Fahrinformation-Anzeige die Lautstärke bzw. die Tonart so verändert werden, dass ein schriller, lauter Warnton einen groben Fahrfehler bzw. ein schlechtes Fahrverhalten signalisiert, während zum Beispiel ein angenehm melodiös klingender Signalton eine Zustimmung signalisiert. Das Gleiche gilt in analoger Weise für Sprachaussagen, die zum Beispiel explizit einen Tadel oder ein Lob aussprechen.

Besonders bevorzugt ist auch eine Ausgestaltung, bei der mehrere unterschiedliche Fahrinformation-Anzeigen in einer kombinierten Weise zum Einsatz kommen können, zum Beispiel eine optische Fahrinformation-Anzeige in Verbindung mit einer akustischen Fahrinformation-Anzeige. In einer definierten Grundstufe können dann sämtliche Fahrinformationen unverändert angezeigt werden. Bei einem mittels der Fahrstil-Bewertungseinheit erfassten positiven oder negativen Lernerfolg kann dann, insbesondere auch in Abhängigkeit von einem festgestellten Grad des Lernerfolges, wenigstens eine der Fahrinformation-Anzeigen in einer entsprechenden Weise verändert werden. Zum Beispiel kann in einer Grundstufe ein optischer Fahrhinweis großflächig dargestellt werden, verbunden mit einem deutlich wahrnehmbaren Warnton. Bei einem sich einstellenden positiven Lernerfolg im Hinblick auf eine Wunschfahrweise kann dann zum Beispiel eine Adaption dahingehend erfolgen, dass die akustische Fahrinformation unterdrückt wird und ein optischer Fahrhinweis bzw. eine optische Fahrinformation nur noch mit dezenten Farben und in dezenter Größe dargestellt ist. Bei einer Verschlechterung des Lernerfolgs kann dagegen der Warnton noch lauter ausgegeben werden und auch zum Beispiel die Anzeigeintensität der optischen Fahrinformation erhöht bzw. vergrößert werden. Dies ist nur eines von vielen möglichen Beispielen und soll lediglich zur Verdeutlichung dieser Ausführungsvarianten dienen.

Gemäß einer weiteren besonders bevorzugten Ausgestaltung der vorliegenden Erfindungsidee kann vorgesehen sein, dass die Anzeigehäufigkeit und/oder die Anzeigedauer der wenigstens einen Fahrinformation-Anzeige so ausgelegt ist, dass die Fahrinformation in einer Grundeinstellung bei jedem erfassten Fahrfehler angezeigt wird. Anschließend kann dann die Anzeigehäufigkeit und/oder die Anzeigedauer bei einem mittels der Fahrstilbewertungseinrichtung erfassten positiven oder negativen Lernerfolg, insbesondere in Abhängigkeit von einem Grad des Lernerfolgs, verändert werden. Beispielsweise kann bei einem schlechten Fahrstil die Anzeigehäufigkeit so eingestellt sein, dass die Fahrinformation bei jedem Fehlverhalten dargestellt wird. Die Anzeigehäufigkeit kann aber auch soweit reduziert werden, dass bei zum Beispiel erfahrenen, geschulten Fahrem bei einer einmaligen Erfassung eines Fahrfehlers auch kein Warnhinweis mehr ausgegeben wird.

Das heißt somit, dass gemäß einer bevorzugten Ausgestaltung die Anzeige der Fahrinformation bei Überschreiten oder Erreichen eines vorgegebenen, definierten positiven Lernerfolgschwellwertes unterdrückt werden kann, wobei die Unterdrückung bevorzugt lediglich solange erfolgt, bis in Abhängigkeit von der Art und/oder der Häufigkeit eines gegebenenfalls festgestellten neuerlichen Fahrfehlers ein definiertes Rücksetzen in den Informations- bzw. Hinweismodus vorgenommen wird.

Allgemein gesehen kann somit gemäß einer weiteren besonders bevorzugten erfindungsgemäßen Ausführungsvariante vorgesehen sein, dass die Anzeige bei festgestelltem positiven Lernerfolg zu einer Abschwächung und/oder einer Reduzierung (bis hin zur Unterdrückung) der Anzeige der wenigstens einen Fahrinformation adaptiert wird, wobei in diesem Zusammenhang bevorzugt vorgesehen werden könnte, dass zeitlich nach einer solchermaßen positiven Adaption und wenigstens einem neuerlich festgestellten Fahrfehler eine Intensivierung der Anzeige der wenigstens einen Fahrerinformation bis hin zur Grundstellung vorgenommen werden kann, wobei bevorzugt die Art und/oder die Häufigkeit des wenigstens einen festgestellten neuerlichen Fahrfehlers berücksichtigt wird.

Mit einer derartigen Verfahrensführung ist sichergestellt, dass nicht nur eine einseitige Adaption bei einem einmaligen positiven Lernerfolg erfolgt, sondern dass der Fahrer bei einer Verschlechterung seiner Fahrweise bzw. seines Fahrstils auch wieder damit rechnen muss, dass er zurückgestuft wird, so dass für den Fahrer eine dauerhafte Motivation vorhanden ist, seine Fahrweise einer vorgegebenen Wunschfahrweise anzupassen.

Andererseits bedeutet dies aber auch, dass bei festgestelltem negativen, insbesondere über einen vorgegebenen Zeitraum negativen Lernerfolg und/oder Fahrverhalten eine Intensivierung der Anzeige der wenigstens einen Fahrinformation in jeglicher Hinsicht erfolgen kann, insbesondere auch unter Berücksichtigung der Art und/oder der Häufigkeit des festgestellten Fahrfehlers.

Des Weiteren ist es gemäß einer besonders bevorzugten Ausgestaltung vorteilhaft, dass für das Befolgen von mittels der Fahrinformation-Anzeige angezeigten Fahrinformationen eine eine positive Stimmung erzeugende Belohnungsinformation angezeigt wird, zum Beispiel ein Lob und/oder eine monetäre Einsparung optisch und/oder akustisch angezeigt wird. Alternativ oder zusätzlich können bei Nicht-Befolgen, insbesondere bei wiederholtem Nicht-Befolgen, von mittels der Fahrinformation-Anzeige angezeigten Fahrinformationen Sanktionsmaßnahmen angezeigt und/oder abgespeichert werden, insbesondere in einem digitalen Tachographen abgespeichert werden. Über die zeitliche Entwicklung der Häufigkeit und des Befolgengrads der gegebenen Fahrinformationen kann somit ein Fahrermotivationsmodell bestimmt werden. Bleibt beispielsweise die Häufigkeit eines Fahrfehlers über einen längeren Zeitraum konstant hoch und werden die gegebenen Fahrinformationen über einen längeren Zeitraum nicht befolgt, so kann zum Beispiel von einem Lernverweigerer ausgegangen werden. Dies kann zum Beispiel durch entsprechende zusätzliche Schulungsmaßnahmen sanktioniert werden. Werden die Fahrinformationen jedoch bei zum Beispiel hoher Fahrfehlerhäufigkeit befolgt, so kann dennoch von einem motivierten, aber noch nicht erfahrenen Fahrer ausgegangen werden. Mit dem Fahrermotivationsmodell kann dann das Belohnungssystem angepasst werden, zum Beispiel dergestalt, dass die Adaption bei einem sich besserndem Fahrverhalten gegebenenfalls schneller erfolgt als dies bei einer Grundeinstellung der Fall wäre. Auch ein besonderes Hervorheben der Verbesserungen, zum Beispiel auf einer Fahrerkarte oder einer Speicherkarte oder einem Fahrerblatt kann hier vorgesehen werden.

Die Beeinflussung der Anzeigeparameter erfolgt insbesondere durch die Beobachtung der Fahrweise des Fahrers. Dabei werden vor allem die Fahrerhandlungen auf einer vorgegebenen Strecke einbezogen. Kann der Fahrer beispielsweise über eine Fahrerkarte eines digitalen Tachographen identifiziert werden, so kann auch die Historie seines bisher bekannten Fahrstils miteinbezogen werden. Die maßgeblichen Einflussgrößen auf die Anzeigeparameter werden in dem erfindungsgemäßen Verfahren zum Beispiel wie folgt herangezogen:

Im Falle eines bestimmten Fahrfehlers mit einer bestimmten Häufigkeit kann zum Beispiel die Anzeigenintensität der wenigstens einen Fahrinformation in einem definierten Maße erhöht werden.

Weiter kann zum Beispiel für den Fall, dass Fahrhinweise in einem definiert hohen Maße befolgt werden, wie bereits zuvor dargestellt, die Anzeigenintensität der wenigstens einen Fahrinformation in einem definierten Maße abgeschwächt werden. Alternativ oder zusätzlich kann auch zum Beispiel auf eine ausführliche Erklärung des Fahrfehlers verzichtet werden.

Gemäß einer weitern Variante können die unterschiedlichen Fahrfehler separat bewertet und dementsprechend im Hinblick auf die angezeigte Fahrinformation auch unterschiedlich adaptiert werden. Schaltet der Fahrer beispielsweise schon in optimaler Weise, so kann zum Beispiel die Häufigkeit von Schalthinweis-Fahrinformationen reduziert werden. Gelingt es aber beispielsweise demselben Fahrer nicht oder nur schlecht, den Schwung eines Fahrzeugs in kraftstoffsparender Weise auszunutzen, so werden ihm bei dieser Fahrfehlerart entsprechende Fahrhinweise in der gebotenen Häufigkeit und im gebotenen Detail gegeben.

Des Weiteren kann auch zum Beispiel eine Fahrfehlerauswirkung bewertet werden, zum Beispiel dahingehend, ob das Kraftstoffeinsparungspotential oder die Verschleißreduzierung durch einen Fahrfehler in einem geringen oder großen Maße betroffen ist. Je nach dem Fehlergrad kann hier zum Beispiel die Anzeigeintensität und die Anzeigehäufigkeit der jeweiligen Fahrinformation reduziert werden. Ganz allgemein gesprochen kann somit mit der erfindungsgemäßen Lehre bevorzugt auch eine Fahrfehlerabweichung von einem vorgegebenen Sollwert wenigstens eines erfassten Fahrfehlers bewertet und in Abhängigkeit von dem Grad der Abweichung dann eine Adaption der Fahrinformation-Anzeige in einem gewünschten Maße vorgenommen werden.

Des Weiteren kann auch ein Grad der Fahrerbelastung und/oder einer Fahrbeanspruchung festgestellt werden und dementsprechend eine Adaption der wenigstens einen Fahrinformation-Anzeige in Abhängigkeit von dem festgestellten Grad der Fahrerbelastung vorgenommen werden. Wird beispielsweise eine hohe Fahrerbeanspruchung erkannt, so ist es häufig nicht sinnvoll, den Fahrer durch zusätzliche Fahrhinweise noch zu belasten.

Des Weiteren kann der Grad der Adaption der wenigstens einen Fahrinformation-Anzeige in Abhängigkeit von definierten Parametern bzw. Umgebungsbedingungen vorgegeben und/oder bestimmt sein, zum Beispiel in Abhängigkeit von einer Tageszeit und/oder von Witterungsbedingungen und/oder einer aktuellen Verkehrssituation.

Die erfindungsgemäße Aufgabe wird weiter gelöst durch eine Vorrichtung mit den Merkmalen des Anspruchs 17. Die sich hiermit ergebenden Vorteile wurden bereits zuvor in Verbindung mit der erfindungsgemäßen Verfahrensführung gewürdigt, so dass darauf an dieser Stelle nicht mehr weiter eingegangen wird.

Die vorstehend erläuterten und/oder in den Unteransprüchen wiedergegebenen vorteilhaften Aus- und Weiterbildungen der Erfindung können dabei - außer zum Beispiel in den Fällen eindeutiger Abhängigkeiten oder unvereinbarer Alternativen - einzeln oder aber auch in beliebiger Kombination miteinander zur Anwendung kommen.

Die Erfindung wird nachfolgend anhand einer äußerst schematischen Prinzipskizze beispielhaft veranschaulicht.

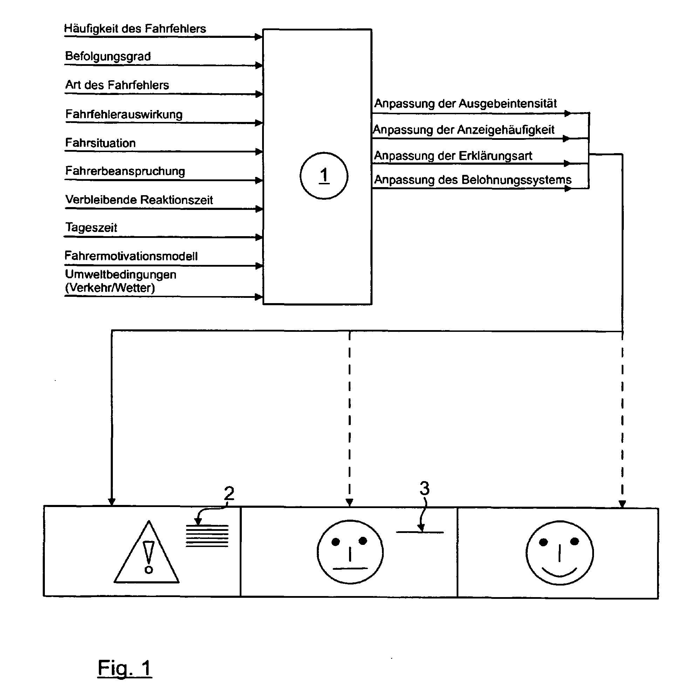

Die äußerst schematische Prinzipskizze zeigt eine Bewertungseinrichtung 1, mittels der definierte Fahrstilparameter erfasst werden, was hier zum Beispiel die Häufigkeit eines bestimmten Fahrfehlers, ein Grad der Befolgung von Fahrhinweisen (Befolgungsgrad), die Art des Fahrfehlers, eine Fahrfehlerauswirkung, eine bestimmte Fahrsituation, eine Fahrerbeanspruchung, eine verbleibende Reaktionszeit, eine Tageszeit, ein zuvor erläutertes Belohnungs- oder Fahrermotivationsmodel sowie die Umweltbedingungen (Verkehr/Wetter) sind bzw. sein können. In Abhängigkeit von diesen erfassten Daten erfolgt eine Auswertung dahingehend, dass die Ausgabeintensität, die Anzeigehäufigkeit, die Erklärungsart und ein Belohnungssystem entsprechend adaptiert werden, zum Beispiel dahingehend, dass, wie dies auf der linken Bildseite der Fig. 1 lediglich äußerst schematisch und beispielhaft dargestellt ist, ein großflächiges Warnsymbol bei Erfassung eines erheblichen Fahrfehlers bzw. eines schlechten Fahrstils zusammen mit einer relativ detaillierten Erklärung 2 in Textform ausgegeben wird. Soll dagegen dem Fahrer angezeigt werden, dass er sich vorbildlich verhält und dass bei ihm ein positiver Lernerfolg aufgetreten ist, so kann zum Beispiel wie dies in der rechten Bildhälfte der Fig. 1 dargestellt ist, ein Anerkennungssymbol angezeigt werden, das hier lediglich beispielhaft durch einen Smiley dargestellt ist. Ein dazwischenliegendes Fahrverhalten kann zum Beispiel beispielhaft durch eine den Zwischenzustand deutlich anzeigende Symbolik mit reduziertem Erklärungstext 3 vermittelt werden, was hier ebenfalls lediglich äußerst schematisch dargestellt ist.

## Patentansprüche

1. Verfahren zur Bewertung der Fahrweise eines Fahrzeugführers von Kraftfahrzeugen, insbesondere von Nutzfahrzeugen, bei dem dem Fahrer in Abhängigkeit von definierten während des Fahrzeugbetriebs erfassten Fahrsituationen wenigstens eine die Fahrweise bewertende und/oder die Fahrweise vorgebende Fahrinformation angezeigt wird, wobei die Fahrinformation-Anzeige in Abhängigkeit von einem mittels einer Fahrstil-Bewertungseinrichtung erfassten Lernfortschritt des Fahrers in einer definiert vorgegebenen Weise adaptiert wird, und wobei im Rahmen der Adaption die Art und/oder die Dauer und/oder die Häufigkeit der Anzeige der wenigstens einen Fahrinformation verändert wird, wobei die Anzeige bei festgestelltem positiven Lernerfolg zu einer Abschwächung und/oder einer Reduzierung bis hin zur Unterbindung der Anzeige adaptiert wird, **dadurch gekennzeichnet, dass** zeitlich nach einer solchermaßen erfolgten positiven Adaption und wenigstens einem neuerlich festgestellten Fahrfehler eine Intensivierung der Anzeige der wenigstens einen Fahrinformation unter Berücksichtigung der Art und/oder der Häufigkeit des wenigstens einen festgestellten Fahrfehlers vorgenommen wird, dergestalt, dass unterschiedliche Fahrfehler separat bewertet und dementsprechend im Hinblick auf die angezeigte Fahrerinformation unterschiedlich adaptiert werden, und dass eine Fahrfehlerabweichung wenigstens eines erfassten Fahrfehlers von einem vorgegebenen Sollwert bewertet und in Abhängigkeit von dem Grad der Abweichung eine Adaption der Fahrinformation-Anzeige vorgenommen wird, und wobei der Adaptionsgrad für eine Adaption der wenigstens einen Fahrinformation-Anzeige zudem in Abhängigkeit von einer Tageszeit, Witterungsbedingungen und einer aktuellen Verkehrssituation vorgegeben und/oder bestimmt wird, und wobei die die Fahrweise und den Lernfortschritt eines Fahrers wiederspiegelnden Daten auf einem Speichermedium abgespeichert werden, so dass der Lernfortschritt und das Fahrverhalten fahrzeugübergreifend und fahrtenübergreifend über einen definierten Zeitraum bewertbar ist.

2. Verfahren nach Anspruch 1, **dadurch gekennzeichnet, dass** bei einer optischen Fahrinformation-Anzeige die Größe und/oder die Farbe und/oder die Farbintensität und/oder die Symbolik und/oder ein Informationstext verändert wird.

3. Verfahren nach Anspruch 1 oder 2, **dadurch gekennzeichnet, dass** bei einer akustischen Fahrinformation-Anzeige die Lautstärke und/oder die Tonart und/oder eine Aussage verändert wird.

4. Verfahren nach einem der vorhergehenden Ansprüche, **dadurch gekennzeichnet, dass** bei mehreren, unterschiedlichen Fahrinformation-Anzeigen in einer Grundstufe sämtliche Fahrinformationen unverändert angezeigt werden, und
dass bei einem mittels der Fahrstil-Bewertungseinrichtung erfassten Lernerfolg, insbesondere in Abhängigkeit von einem Grad des Lernerfolgs, wenigstens eine der Fahrinformation-Anzeigen verändert wird.

5. Verfahren nach einem der vorhergehenden Ansprüche, **dadurch gekennzeichnet, dass** die Anzeigehäufigkeit und/oder -dauer der wenigstens einen Fahrinformation-Anzeige so ausgelegt ist, dass die Fahrinformation in einer Grundeinstellung bei jedem erfassten Fahrfehler angezeigt wird, und
dass die Anzeigehäufigkeit und/oder -dauer bei einem mittels der Fahrstil-Bewertungseinrichtung erfassten Lernerfolg, insbesondere in Abhängigkeit von einem Grad des Lernerfolgs, verändert wird.

6. Verfahren nach einem der vorhergehenden Ansprüche, **dadurch gekennzeichnet, dass** die die Anzeige der wenigstens einen Fahrinformation bei Überschreiten oder Erreichen eines vorgegebenen, definierten positiven Lernerfolgschwellwertes unterdrückt wird, insbesondere solange unterdrückt wird, bis in Abhängigkeit von der Art und/oder Häufigkeit eines gegebenenfalls festgestellten neuerlichen Fahrfehlers ein definiertes Rücksetzen in einen Hinweis-Modus vorgenommen wird.

7. Verfahren nach einem der vorhergehenden Ansprüche, **dadurch gekennzeichnet, dass** für das Befolgen von mittels der Fahrinformation-Anzeige angezeigten Fahrinformationen eine eine positive Stimmung erzeugende Belonnungsinformation angezeigt wird, insbesondere ein Lob und/oder eine monetäre Einsparung angezeigt wird, und/oder das für das Nicht-Befolgen, insbesondere für das wiederholte Nicht-Befolgen, von mittels der Fahrinformation-Anzeige angezeigten Fahrinformationen Sanktionsmaßnahmen angezeigt und/oder abgespeichert werden, insbesondere in einem digitalen Tachographen abgespeichert werden.

8. Verfahren nach einem der vorhergehenden Ansprüche, **dadurch gekennzeichnet, dass** für den Fall, dass Fahrinformationen in einem definiert hohen Maße befolgt werden, die Anzeigeintensität der wenigstens einen Fahrinformation in einem definierten Maße abgeschwächt wird.

9. Verfahren nach einem der vorhergehenden Ansprüche, **dadurch gekennzeichnet, dass** ein Grad der Fahrerbelastung und/oder einer Fahrerbeanspruchung festgestellt wird, und dass eine Adaption der wenigstens einen Fahrinformations-Anzeige in Abhängigkeit von dem Grad der Belastung und/oder Beanspruchung vorgenommen wird.

10. Vorrichtung zur Bewertung der Fahrweise eines Fahrzeugführers von Kraftfahrzeugen, insbesondere zur Durchführung eines Verfahrens gemäß einem der vorhergehenden Verfahrensansprüche, mit wenigstens einer Fahrinformation-Anzeigeeinrichtung zur Anzeige wenigstens einer die Fahrweise eines Fahrers bewertenden und/oder vorgebenden Fahrinformation, und mit einer Fahrstilbewertungseinrichtung zur Erfassung und/oder Auswertung definierter Fahrstilparameter, wobei die Fahrinformation-Anzeige in Abhängigkeit von einem mittels der Fahrstilbewertungseinrichtung erfassten Lernfortschritt und/oder Fahrverhalten adaptierbar ist, und wobei die Anzeige bei festgestelltem positiven Lernerfolg zu einer Abschwächung und/oder einer Reduzierung bis hin zur Unterbindung der Anzeige adaptierbar ist, **dadurch gekennzeichnet, dass** die Fahrstil-Bewertungseinrichtung dergestalt ausgebildet ist, dass zeitlich nach einer erfolgten positiven Adaption und wenigstens einem neuerlich festgestellten Fahrfehler eine Intensivierung der Anzeige der wenigstens einen Fahrinformation unter Berücksichtigung der Art und/oder der Häufigkeit des wenigstens einen festgestellten Fahrfehlers vornehmbar ist, dergestalt, dass unterschiedliche Fahrfehler separat bewertbar und dementsprechend im Hinblick auf die angezeigte Fahrerinformation unterschiedlich adoptierbar sind, und dass eine Fahrfehlerabweichung wenigstens eines erfassten Fahrfehlers von einem vorgegebenen Sollwert bewertbar und in Abhängigkeit von dem Grad der Abweichung eine Adaption der Fahrinformation-Anzeige vornehmbar ist, wobei der Adaptionsgrad für eine Adaption der wenigstens einen Fahrinformation-Anzeige zudem in Abhängigkeit von einer Tageszeit, Witterungsbedingungen und einer aktuellen Verkehrssituation vorgebbar und/oder bestimmbar ist, und
dass ein Speichermedium vorgesehen ist, auf dem die die Fahrweise und/oder den Lernfortschritt eines Fahrers wiederspiegelnden Daten abgespeichert sind.

## Claims

1. Method for evaluating the driving style of a driver of motor vehicles, in particular commercial vehicles, in which at least one driving information item which evaluates the driving style and/or predefines the driving style is displayed to the driver as a function of defined driving situations detected during the operation of the vehicle, wherein the driving information display is adapted as a function of learning progress of the driver, detected by means of a driving style evaluation device, in a definitely predefined fashion, and wherein the type and/or the duration and/or the frequency of the display of the at least one driving information item is changed within the scope of the adaptation, wherein when positive learning success is detected the display is adapted in the direction of attenuation and/or reduction, ranging as far as disabling of the display, **characterized in that** after positive adaptation has taken place in such a way and after at least one newly detected driving error, the display of the at least one driving information item is intensified taking into account the type and/or the frequency of the at least one detected driving error, such that different driving errors are evaluated separately and accordingly adapted differently with respect to the displayed driver information, and **in that** a driving error deviation of at least one detected driving error is evaluated from a predefined setpoint value and the driving information display is adapted as a function of the degree of deviation, and wherein the degree of adaptation is additionally predefined and/or determined for adaptation of the at least one driving information display as a function of a time of day, weather conditions and a current traffic situation, and wherein the data which reflect the driving style and the learning progress of a driver is stored on a memory medium, with the result that the learning progress and the driving behaviour can be evaluated over a defined time period in a way which covers all the vehicles and journeys.

2. Method according to Claim 1, **characterized in that** in the case of an optical driving information display the size and/or the colour and/or the colour intensity and/or the symbol system and/or an information text are/is changed.

3. Method according to Claim 1 or 2, **characterized in that** in the case of an acoustic driving information display the volume and/or the tone and/or an announcement are/is changed.

4. Method according to one of the preceding claims, **characterized in that** in the case of a plurality of different driving information displays all the driving information is displayed in an unchanged form at a basic level, and
**in that** in the case of learning success which is detected by means of the driving style evaluation device, in particular as a function of a degree of the learning success, at least one of the driving information displays is changed.

5. Method according to one of the preceding claims, **characterized in that** the frequency and/or duration of the display of the at least one driving information display is configured in such a way that the driving information is displayed in a basic setting whenever a driving error is detected, and
**in that** the frequency and/or duration of display in the case of learning success which is detected by means of the driving style evaluation device is changed, in particular as a function of a degree of the learning success.

6. Method according to one of the preceding claims, **characterized in that**, when a predefined, defined positive learning success threshold value is exceeded or reached, the display of the at least one driving information item is suppressed, in particular is suppressed until defined resetting into a message mode is performed as a function of the type and/or frequency of a new driving error which is optionally detected, under certain circumstances.

7. Method according to one of the preceding claims, **characterized in that** a reward information item which generates a positive emotion, in particular praise and/or monetary saving, for following driving information which is displayed by means of the driving information display, is displayed, and/or **in that** sanction measures for failure to follow, in particular for the repeated failure to follow, driving information displayed by means of the driving information display, are displayed and/or stored, in particular stored in a digital tachograph.

8. Method according to one of the preceding claims, **characterized in that** in the event of driving information being followed to a definite large extent, the display intensity of the at least one driving information item is attenuated to a defined degree.

9. Method according to one of the preceding claims, **characterized in that** a degree of driver loading and/or driver stress is detected, and **in that** the at least one driving information display is adapted as a function of the degree of loading and/or stress.

10. Device for evaluating the driving style of a driver of motor vehicles, in particular for carrying out a method according to one of the preceding method claims, having at least one driving information display device for displaying at least one driving information item which evaluates and/or predefines the driving style of a driver, and having a driving style evaluation device for detecting and/or evaluating defined driving style parameters, wherein the driving information display can be adapted as a function of learning progress and/or driving behaviour detected by means of the driving style evaluation device, and wherein when positive learning success is detected the display can be adapted in the direction of attenuation and/or reduction, ranging as far as disabling of the display, **characterized in that** the driving style evaluation device is embodied in such a way that after positive adaptation has taken place and after at least one newly detected driving error, the display of the at least one driving information item can be intensified taking into account the type and/or the frequency of the at least one detected driving error, such that different driving errors can be evaluated separately and accordingly adapted differently with respect to the displayed driver information, and **in that** a driving error deviation of at least one detected driving error can be evaluated from a predefined setpoint value and the driving information display can be adapted as a function of the degree of deviation, wherein the degree of adaptation can be additionally predefined and/or determined for adaptation of the at least one driving information display as a function of a time of day, weather conditions and a current traffic situation, and
**in that** a memory medium is provided on which the data which reflect the driving style and/or the learning progress of a driver is stored.

## Revendications

1. Procédé d'évaluation de la conduite d'un conducteur de véhicules automobiles, notamment de véhicules utilitaires, dans lequel au moins une information de conduite analysant la conduite et/ou donnant le cap de la conduite est affichée au conducteur en fonction de situations de conduite détectées définies en situation de fonctionnement du véhicule, l'affichage de l'information de conduite étant adapté d'une certaine façon prédéfinie, en fonction d'un progrès d'apprentissage détecté du conducteur, à l'aide d'un dispositif d'évaluation de style de conduite et le type et/ou la durée et/ou la fréquence de l'affichage de l'au moins une information de conduite variant dans le cadre de l'adaptation, l'affichage étant adapté, en cas de réussite d'apprentissage positive détectée, vers un affaiblissement et/ou une réduction, jusqu'à une suppression de l'affichage, **caractérisé en ce que** de temps en temps, après une telle adaptation positive réussie et au moins une erreur de conduite de nouveau détectée, une intensification de l'affichage de l'au moins une information de conduite est réalisée en tenant compte du type et/ou de la fréquence de l'au moins une erreur de conduite détectée, de sorte que différentes erreurs de conduite sont analysées séparément et sont adaptées de façon différente en fonction de l'information de conducteur affichée et qu'un écart d'erreur de conduite d'au moins une erreur de conduite détectée par rapport à une valeur théorique prédéfinie est analysé et qu'en fonction du degré de l'écart, une adaptation de l'affichage de l'information de conduite est réalisée, et le degré d'adaptation étant prédéfini et/ou déterminé pour une adaptation de l'au moins un affichage de l'information de conduite ainsi, en sus, qu'en fonction de l'heure, des conditions météorologiques et de l'état actuel du trafic et les données reflétant la façon de conduire et le progrès d'apprentissage d'un conducteur étant mémorisées sur un support de mémoire, de sorte que le progrès d'apprentissage et le comportement de conduite peuvent être évalués pour tout le véhicule et pour toutes les conduites sur une période définie.

2. Procédé selon la revendication 1, **caractérisé en ce que** la taille et/ou la couleur et/ou l'intensité des couleurs et/ou la symbolique et/ou un texte d'information sont modifiés en cas d'affichage optique de l'information de conduite.

3. Procédé selon la revendication 1 ou 2, **caractérisé en ce que** le volume et/ou la tonalité et/ou un message d'annonce sont modifiés en cas d'affichage acoustique de l'information de conduite.

4. Procédé selon l'une quelconque des revendications précédentes, **caractérisé en ce que** :
de base, l'ensemble des informations de conduite est affiché de façon inchangée en présence de plusieurs affichages différents de l'information de conduite ; et
au moins un affichage de l'information de conduite est modifié à l'aide du dispositif d'évaluation de style de conduite en cas de réussite d'apprentissage, notamment en fonction du degré détecté de la réussite d'apprentissage.

5. Procédé selon l'une quelconque des revendications précédentes, **caractérisé en ce que** la fréquence et/ou la durée d'affichage de l'au moins un affichage de l'information de conduite sont conçues de telle sorte que :
l'information de conduite est affichée, dans le réglage de base, à chaque erreur de conduite détectée ; et
la fréquence et/ou la durée d'affichage sont modifiées en cas de réussite d'apprentissage détectée à l'aide du dispositif d'évaluation de style de conduite,
notamment en fonction du degré de la réussite d'apprentissage.

6. Procédé selon l'une quelconque des revendications précédentes, **caractérisé en ce que** l'affichage de l'au moins une information de conduite est supprimé lorsqu'une valeur seuil positive prédéfinie de réussite d'apprentissage est atteinte ou dépassée, et est notamment supprimée jusqu'à ce qu'une remise à zéro définie soit réalisée dans un mode informatif en fonction du type et/ou de la fréquence d'une erreur de conduite de nouveau détectée le cas échéant.

7. Procédé selon l'une quelconque des revendications précédentes, **caractérisé en ce que** pour suivre les informations de conduite affichées à l'aide de l'affichage de l'information de conduite, une information de récompense produisant une ambiance positive est affichée, notamment un compliment et/ou une économie financière réalisée et/ou des mesures de sanction étant affichées et/ou mémorisées pour le non-suivi, notamment pour le non-suivi répété des informations de conduite affichées à l'aide de l'affichage de l'information de conduite, notamment dans un tachygraphe numérique.

8. Procédé selon l'une quelconque des revendications précédentes, **caractérisé en ce que** lorsque les informations de conduite sont suivies à un rythme élevé défini, l'intensité d'affichage de l'au moins une information de conduite est réduite dans une mesure définie.

9. Procédé selon l'une quelconque des revendications précédentes, **caractérisé en ce qu'**un degré de sollicitation et/ou d'interpellation du conducteur est détecté et qu'une adaptation de l'au moins un affichage d'informations de conduite est réalisé en fonction du degré de sollicitation et/ou d'interpellation.

10. Dispositif d'évaluation de la conduite d'un conducteur de véhicules automobiles, notamment de mise en oeuvre d'un procédé selon l'une quelconque des revendications de procédé précédentes, avec au moins un dispositif d'affichage d'information de conduite permettant d'afficher au moins une information de conduite analysant la conduite et/ou donnant le cap de la conduite d'un conducteur et avec un dispositif d'évaluation de style de conduite permettant de détecter et/ou d'analyser un paramètre de style de conduite défini, l'affichage de l'information de conduite pouvant être adapté en fonction d'un progrès d'apprentissage et/ou d'un comportement de conduite détecté à l'aide du dispositif d'évaluation de style de conduite et l'affichage pouvant être adapté, en cas de réussite d'apprentissage positive constatée, vers un affaiblissement et/ou une réduction, jusqu'à une suppression de l'affichage, **caractérisé en ce que** le dispositif d'évaluation de style de conduite est conçu de telle sorte que de temps en temps, après l'adaptation positive réussie et au moins une erreur de conduite de nouveau détectée, une intensification de l'affichage de l'au moins une information de conduite est réalisée en tenant compte du type et/ou de la fréquence de l'au moins une erreur de conduite détectée, de sorte que différentes
erreurs de conduite peuvent être analysées séparément et peuvent être adaptées de façon différente en fonction de l'information de conducteur affichée et qu'un écart d'erreur de conduite d'au moins une erreur de conduite détectée peut être analysé par rapport à une valeur théorique prédéfinie et qu'en fonction du degré de l'écart, une adaptation de l'affichage de l'information de conduite est réalisée, le degré d'adaptation pouvant être prédéfini et/ou déterminé pour une adaptation de l'au moins un affichage de l'information de conduite ainsi, en sus, qu'en fonction de l'heure, des conditions météorologiques et de l'état actuel du trafic ; et un support de mémoire étant prévu sur lequel les données reflétant la façon de conduire et le progrès d'apprentissage d'un conducteur sont mémorisées.
